# FASCICULE DE BREVET EUROPEEN

(11) **EP 1 778 600 B1**
(45) Date de publication et mention de la délivrance du brevet: **29.03.2017**
(21) Numéro de dépôt: 05793303.8
(22) Date de dépôt: 26.07.2005
(51) Int. Cl.: C04B 35/624, C04B 38/02

(54) **PROCEDE D'OBTENTION DE CERAMIQUES POREUSES, MOUSSE CERAMIQUE POREUSE ET SON UTILISATION**
VERFAHREN ZUR HERSTELLUNG PORÖSER KERAMIKEN, PORÖSEN KERAMIKSCHAUM UND SEINE VERWENDUNG
METHOD OF OBTAINING POROUS CERAMICS, POROUS CERAMIC FOAM AND ITS USE

(30) Priorité: 28.07.2004 FR 0408330
(43) Date de publication de la demande: 02.05.2007
(73) Titulaire: Saint-Gobain Centre de Recherches et d'Etudes Européen, 92400 Courbevoie (FR)
(72) Inventeur: TARDIVAT, C. Bat. G La Chevalière, F-13090 AIX-EN-PROVENCE (FR); MERCIER, Emmanuel, F-13300 SALON DE PROVENCE (FR); HIS, Christian, F-84300 CAVAILLON (FR); VILLERMAUX, Franceline, F-84000 AVIGNON (FR)
(74) Mandataire: Nony
(86) Numéro de dépôt international: PCT/FR2005/001941
(87) Numéro de publication internationale: WO 2006/018537

(56) Documents cités:
- EP-A- 1 329 438
- EP-A- 1 329 439
- EP-A- 1 359 131

## Description

L'invention se rapporte à un procédé d'obtention de céramiques poreuses et aux céramiques poreuses ainsi obtenues.

Les céramiques poreuses sont des produits connus et caractérisés par une faible densité (5 à 50% de la densité théorique). Elles peuvent être constituées à partir de la grande majorité des poudres céramiques, en particulier l'alumine, le carbure de silicium....

Il existe plusieurs procédés de fabrication permettant d'obtenir des céramiques poreuses.

Le plus simple de ces procédés comprend l'addition d'un agent porogène dans une barbotine céramique ou un mélange à presser. Le tout est mis en forme puis subit un cycle de cuisson qui permet de brûler l'agent porogène. En brûlant, l'agent porogène laisse place à une porosité. Ce procédé est décrit par exemple dans le brevet EP 1 140 731 B1. Il présente l'inconvénient de conduire à un dégagement gazeux (éventuellement toxique) dû à la pyrolyse de l'agent porogène. Par ailleurs, il est difficile de fabriquer des pièces épaisses, car le dégagement gazeux est alors difficile à effectuer (il faut pouvoir évacuer le gaz de manière homogène).

Une autre technique est la réplication d'une mousse en polymère, polyuréthane par exemple. Cette mousse est recouverte d'une barbotine céramique. Le tout subit ensuite un cycle de cuisson qui permet de brûler la mousse polyuréthane et de fritter la mousse céramique dont la structure est induite par la mousse polyuréthane de départ. Ce procédé est décrit par exemple dans le brevet US 4,024,212. On retrouve les inconvénients liés au dégagement gazeux (en brûlant, le polyuréthane dégage des gaz à liaison C-N qui sont dangereux). Par ailleurs, il est difficile de réaliser des pièces avec des pores de dimensions inférieures à 200µm.

Une technique alternative est la création de porosités par la formation de gaz par réaction chimique entre différents additifs d'une barbotine de céramique. Ce procédé est décrit par exemple dans les brevets US 5,643,512 ou US 5,705,448. Là encore, on retrouve les inconvénients liés au dégagement de gaz. De plus, il faut associer à ce procédé une technique de consolidation de la mousse.

Une technique consiste à introduire mécaniquement un gaz dans une barbotine par brassage. Là encore, il faut combiner ce procédé avec une technique de consolidation de la mousse obtenue.

Parmi les techniques de consolidation de mousse pouvant être utilisées pour la mise en oeuvre des deux dernières techniques mentionnées ci-dessus, il existe aussi plusieurs possibilités.

Une première solution consiste à mélanger des monomères polymérisables à la barbotine céramique. Dans des conditions particulières, la polymérisation des monomères entraîne la consolidation de la mousse. Ce procédé est décrit par exemple dans le brevet EP 759 020 B1. Par contre, le coût élevé des monomères utilisables ainsi que la difficulté de maîtriser les conditions de polymérisation ont empêché cette technique de se développer de manière industrielle.

Une deuxième solution consiste à réticuler des polymères dans une barbotine céramique. Comme pour la technique précédente, cette réticulation entraîne la consolidation de la mousse. Ce procédé est décrit par exemple dans le brevet EP 330 963. Par contre, le coût élevé des agents de réticulation utilisables ainsi que la difficulté de maîtriser les conditions de réticulation ont empêché cette technique de se développer de manière industrielle.

Un procédé de fabrication de céramiques poreuses plus récent est décrit dans la demande de brevet EP 1 329 439 A1. Ce procédé comporte les étapes suivantes :
1) Préparation d'une suspension d'une poudre céramique dans un dispersant,
2) Préparation d'une solution contenant un biogel, encore appelé « hydrocolloïde », et maintien à une température supérieure à la température de gélification de la solution,
3) Mélange de ladite suspension et de ladite solution, avec ajout d'un agent moussant, jusqu'à obtention d'une mousse, la température étant maintenue suffisamment élevée pour éviter la gélification du biogel,
4) Coulage de la mousse dans un moule,
5) Refroidissement jusqu'à gélification du biogel,
6) Séchage, calcination et frittage de la mousse obtenue.

L'utilisation d'un biogel pour consolider la mousse permet d'éviter les problèmes de toxicité évoqués précédemment. Cependant, il s'avère que si la mousse coulée dans le moule a une épaisseur supérieure à 60 mm, la mousse n'a pas une structure homogène. De plus, selon ce procédé, la quantité d'eau dans le mélange final est importante (45 à 50% en poids) ce qui entraîne des difficultés de séchage, en particulier pour les pièces de grandes dimensions. Il n'est donc pas possible de fabriquer des pièces céramiques poreuses de structure homogène et présentant de telles dimensions.

Il existe donc un besoin pour un procédé permettant de fabriquer des pièces en mousse céramique poreuse, de densité homogène, ayant des dimensions supérieures ou égales à 60 mm.

A cet effet, l'invention propose un procédé de fabrication d'une pièce céramique poreuse comprenant les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme.

Selon l'invention, on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.

Les inventeurs ont observé que l'affaissement de la mousse lors de la mise en oeuvre du procédé selon EP 1 329 439 A1 se produit pendant une période critique s'étendant entre la fin de l'étape de cisaillement et le début de la gélification. Pendant cette période, l'agent gélifiant ne contribue sensiblement pas à la stabilisation structurelle de la mousse qui, pour des épaisseurs de plus de 60 mm, s'effondre sous son propre poids. Etant parvenus à identifier la cause de l'affaissement, ils ont proposé, selon l'invention, d'ajouter un agent stabilisant dans le mélange. L'agent stabilisant est choisi pour sa capacité à augmenter considérablement la viscosité du mélange dès que le cisaillement du mélange cesse, ce qui permet de rigidifier suffisamment la mousse pour éviter son effondrement jusqu'à ce que l'agent gélifiant se gélifie et puisse exercer sa fonction de stabilisation. Il devient ainsi possible de fabriquer des pièces en mousse céramique poreuse, de densité homogène, ayant des dimensions supérieures ou égales à 60 mm et/ou ayant des formes complexes (cône ou cylindre creux, demi-sphère...).

Le procédé selon l'invention peut comporter, après l'étape d), une étape additionnelle e) de frittage de ladite préforme de manière à obtenir une mousse céramique poreuse. De préférence, la température de frittage et tous les composants organiques utilisés sont déterminés de manière que tous lesdits composants organiques soient brûlés au cours du frittage.

De préférence, le procédé selon l'invention présente encore une ou plusieurs des caractéristiques optionnelles suivantes :
- La viscosité instantanée dudit agent stabilisant, en Pa.s, augmente d'au moins un facteur cent quand une vitesse de cisaillement dudit agent stabilisant diminue de 100 s⁻¹ à 0 s⁻¹. Avantageusement, l'effet sur la stabilisation de la mousse en est renforcé, ce qui permet de fabriquer des pièces poreuses d'épaisseurs supérieures à 90 mm.
- L'évolution de la viscosité dudit agent stabilisant en fonction de la vitesse de cisaillement dudit agent stabilisant est sensiblement réversible. Ainsi, dès que la vitesse de cisaillement du mélange M augmente, l'influence de l'agent stabilisant sur la viscosité du mélange diminue, et même peut devenir négligeable. Avantageusement, la présence de l'agent stabilisant ne conduit donc pas à une augmentation importante du besoin énergétique.
- A l'étape a), on prépare ledit mélange M à partir d'une barbotine céramique A, d'un pré-mélange B contenant au moins un agent gélifiant et un agent stabilisant et d'un pré-mélange C contenant au moins un agent moussant.
- On choisit ledit agent stabilisant de manière que, en fin d'étape c), la viscosité de ladite mousse soit supérieure à 1000 Pa.s à 20°C. De préférence, ledit agent stabilisant est un hydrocolloïde, de préférence d'origine végétale, de préférence encore choisi dans le groupe formé par le xanthane et le carraghénane ou un mélange de ceux-ci. L'agent stabilisant préféré est le xanthane. Avantageusement, les hydrocolloïdes d'origine végétales sont éliminés lors de l'étape du frittage de la préforme, ce qui permet d'obtenir une pièce frittée d'une grande pureté.
- La teneur dudit agent stabilisant dans ledit mélange M est comprise entre 0,05 et 5% en poids, de préférence est comprise entre 0,1 et 1%, en poids.
- Ledit mélange M présente une teneur en eau inférieure à 40%, de préférence inférieure à 30 %, en pourcentage en poids.
- Ledit agent gélifiant est un hydrocolloïde d'origine animale ou végétale apte à gélifier de manière thermoréversible ladite composition après moussage. De préférence, ledit agent gélifiant est de la gélatine. Avantageusement, l'agent gélifiant est éliminé lors de l'étape du frittage de la préforme, ce qui permet d'obtenir une pièce frittée d'une grande pureté. De préférence encore, la teneur en agent gélifiant dans le mélange M est comprise entre 1 et 10%, de préférence entre 1 et 6%, en poids.

A l'étape a), on ajoute de préférence audit mélange M un agent plastifiant en une quantité en poids comprise entre 0,25 et 1 fois celle dudit agent gélifiant. De préférence encore, l'agent plastifiant est choisi pour brûler à une température supérieure à la température d'évaporation du liquide servant, à l'étape a), à mettre en suspension la poudre céramique, généralement de l'eau.

L'invention se rapporte également à une céramique poreuse obtenue par le procédé selon l'invention. Cette céramique présente une densité après frittage comprise entre 8 et 50% de la densité théorique du matériau constituant ladite mousse, c'est-à-dire une porosité totale comprise entre 50 et 92%.

Moins de 10% des pores cellulaires ont une taille inférieure à 10µm, 20 à 85% des pores cellulaires ont une taille inférieure à 300µm et 4 à 40% des pores cellulaires ont une taille supérieure à 450µm, les pourcentages étant de pourcentages en nombre.

De préférence, cette céramique poreuse présente encore une ou plusieurs des caractéristiques suivantes :
- La taille des pores cellulaires de cette mousse varie entre 10 et 2000 µm.
- Plus de 15% en nombre des pores cellulaires ont une taille supérieure à 300µm.
- Cette céramique poreuse présente en surface moins de 1500, de préférence moins de 1000, de préférence encore moins de 700 pores cellulaires par dm².
- Cette céramique poreuse présente une épaisseur supérieure à 60 mm.

L'invention concerne enfin l'utilisation d'une céramique poreuse fabriquée au moyen d'un procédé selon l'invention pour l'isolation thermique, notamment dans les fours (en particulier lorsque les mousses sont en alumine ou zircone, de préférence en zircone connue pour avoir un faible rayonnement thermique), pour des supports de catalyse, pour la filtration de liquides ou de gaz chauds (en particulier lorsque les mousses sont en cordiérite ou en carbure de silicium), comme diffuseur (pièce chauffée laissant passer le mélange air/gaz nécessaire à la combustion) dans un brûleur à gaz, ou bien comme arrêteur de flamme (pièce de sécurité permettant d'arrêter les flammes grâce à une porosité de faible taille, dans un récepteur volumétrique solaire, en anglais « solar volumetric receiver », dans des produits sandwichs (en particulier pour l'isolation acoustique) ou comme joint souple.

D'autres caractéristiques et avantages de la présente invention apparaîtront à la lecture de la description qui va suivre et à l'examen du dessin annexé dans lequel :
- les figures 1 à 4 montrent, à différents grossissements, des images obtenues au Microscope Electronique à Balayage sur des échantillons pris à 10 à 20 mm de la surface de pièces frittées fabriquées selon un procédé conforme à l'invention ;
- les figures 5 et 6 sont des graphiques mettant en évidence des comportements rhéologiques de différents pré-mélanges B.

Dans les différentes figures, des références identiques sont utilisées pour désigner des objets identiques ou analogues.

On appelle « taille d'un pore » sa dimension maximale. Dans les produits de l'invention, les pores ont une forme quasi-sphérique et la taille est dans ce cas le diamètre. La taille des pores se mesure par analyse d'images de la surface des mousses frittées.

Dans la première étape a) du procédé de fabrication selon l'invention, on prépare un mélange contenant une poudre céramique en suspension, de préférence dans de l'eau, au moins un agent gélifiant, au moins un agent moussant, et, selon l'invention, au moins un agent stabilisant.

A cette fin, on procède de préférence de la manière suivante.

On prépare d'abord,
- une barbotine A par dispersion de la poudre céramique et d'un dispersant dans de l'eau, selon une technique classique,
- un pré-mélange B par dissolution des agents gélifiant et stabilisant dans de l'eau, à une température supérieure à la température de gélification de l'agent gélifiant,
- un pré-mélange C par solubilisation d'un agent moussant dans de l'eau.

La quantité de poudre céramique dans la barbotine A est de préférence comprise entre 50 et 90 % en poids, de préférence entre 70 et 85% en poids, de la barbotine A. De préférence, le mélange M contient de 50 à 80%, de préférence de 60 à 70%, en poids de particules céramiques.

Le dispersant, par exemple un tensio-actif de type polyacrylate, est choisi de manière à être efficace à la température de mélange.

L'agent gélifiant est de préférence un hydrocolloïde d'origine animale ou végétale apte à gélifier de manière thermoréversible ladite composition après moussage, par exemple de la gélatine, le carraghénane, ou un mélange de ceux-ci.

L'agent stabilisant peut être quelconque, pourvu qu'il présente la propriété de présenter une viscosité qui augmente d'au moins un facteur dix quand le gradient de la vitesse de son cisaillement diminue de 100 s⁻¹ à 0 s⁻¹. De préférence, l'agent stabilisant est choisi de manière que la viscosité du mélange M pendant le cisaillement, soit peu augmentée du fait de son incorporation dans ce mélange.

Avantageusement, il est ainsi possible d'utiliser les mélangeurs utilisés selon la technique antérieure sans avoir besoin d'augmenter la teneur en eau du mélange. L'augmentation de la teneur en eau entraînerait en effet des problèmes lors du séchage ultérieur.

De préférence, l'agent stabilisant est choisi pour être réversible. De préférence encore, on choisit l'agent stabilisant et l'agent gélifiant de manière que
- la viscosité de la mousse gélifiée soit supérieure ou égale à celle d'une mousse gélifiée obtenue à partir d'un mélange identique au mélange M mais qui ne contiendrait pas d'agent stabilisant, et
- la viscosité de la mousse obtenue entre les étapes b) et c) (avant gélification et après la fin de l'opération de moussage) soit supérieure ou égale à celle d'une mousse gélifiée obtenue à partir d'un mélange identique au mélange M mais qui ne contiendrait pas d'agent gélifiant.

De préférence on choisit l'agent stabilisant et l'agent gélifiant de manière qu'ils n'interagissent sensiblement pas l'un sur l'autre. Les associations de gélatine d'une part et de xanthane et/ou de carraghénane, de préférence de xanthane seul, sont préférées entre toutes.

Le xanthane et le carraghénane sont des gels physiques, c'est-à-dire présentant une structure réversible en réseau dans laquelle les liaisons sont formées par interaction physique (cristallisation, formation d'hélice, vitrification...). Par exemple, la molécule de xanthane se conforme sous forme de simple, double ou triple hélice qui interagit avec d'autres molécules pour former un réseau complexe. En solution dans l'eau des agrégats à liaisons faibles se forment. Ces agrégats peuvent être dissociées par l'action de cisaillement.

De préférence, au moins un agent plastifiant, de préférence se présentant sous forme liquide à la température de préparation du mélange M, de préférence un polyol, de préférence encore le glycérol, est ajouté au pré-mélange B. L'agent plastifiant est choisi pour présenter une bonne compatibilité avec l'agent gélifiant, c'est-à-dire une capacité à rester à l'intérieur du mélange M et à résister ainsi à la migration et aux solvants, sans pour autant provoquer de séparation de phases. De préférence la teneur en agent plastifiant est comprise entre 0,25 et 1 fois celle de l'agent gélifiant.

L'agent moussant, de préférence un savon, est de préférence ajouté dans le pré-mélange C en une proportion comprise entre 55 et 75% en poids dudit pré-mélange. De préférence encore, la quantité d'agent moussant est déterminée de manière que sa teneur dans le mélange M soit comprise entre 1 et 3% en poids.

Le mélange M peut en outre contenir un ou plusieurs liants thermoplastiques usuellement utilisés en céramique.

La barbotine A et le pré-mélange C sont ensuite ajoutés au pré-mélange B sous agitation mécanique, la température, dite « température de mélange » étant maintenue supérieure à la température de gélification de l'agent gélifiant. De préférence, les pré-mélanges A, B et C sont mélangés immédiatement après leur préparation pour former le mélange M. L'agent stabilisant conduit à des solutions aqueuses présentant une viscosité stable dans la gamme de température utilisée.

Le pH du pré-mélange B peut être acide, basique ou neutre et est de préférence choisi de manière à permettre une bonne dispersion avec le pré-mélange A.

A l'étape b), le mélange M est cisaillé de manière à mousser. Le cisaillement peut résulter d'une agitation mécanique, d'une insufflation de gaz, ou bien par toute combinaison de ces deux techniques. Dans le cas de l'insufflation de gaz, on préfère utiliser une membrane munie de trous calibrés.

Pendant cette étape b), si la viscosité de l'agent stabilisant est réversible sous l'effet du cisaillement, le cisaillement réduit la viscosité du mélange.

L'étape b) s'effectue à une température supérieure à la température de gélification de l'agent gélifiant, par exemple à la température de mélange.

Après obtention de la mousse céramique, on arête le cisaillement, puis, éventuellement, on coule la mousse dans un moule.

La présence du stabilisant selon l'invention augmente immédiatement la viscosité du mélange du fait de la fin du cisaillement. L'agent stabilisant rigidifie donc la structure de la mousse alors même que la température reste supérieure à la température de gélification. Tout affaissement de la mousse sur elle-même avant l'étape de gélification est ainsi évité et il devient possible de fabriquer des mousses stables ayant une épaisseur de plus de 60 mm, et même de plus de 80 mm.

A l'étape c) on refroidit ou on laisse se refroidir la mousse jusqu'à une température inférieure à la température de gélification de l'agent gélifiant, de préférence jusqu'à température ambiante (10-25°C). La gélification permet avantageusement d'obtenir une mousse gélifiée suffisamment rigide pour être manipulée sans se dégrader. Le procédé se prête donc bien à une mise en oeuvre industrielle.

La mousse gélifiée est alors séchée à température ambiante, puis de préférence étuvée à une température de 100 à 120°C de manière à obtenir une préforme susceptible d'être frittée. La préforme, ou « cru », peut avantageusement avoir une épaisseur pouvant aller jusqu'à 80 mm, et même 150 mm. La préforme est ensuite calcinée à 1300-1700°C. Plus précisément, la préforme est ensuite calcinée sous air, à sa température de frittage, à savoir 1200-1500°C pour la cordiérite et 1400-1800 (2300 si possible)°C pour l'alumine, la mullite ou la zircone ou le carbure de silicium.

Après étuvage et avant frittage ou après frittage, la mousse peut être usinée pour obtenir une pièce aux dimensions souhaitées.

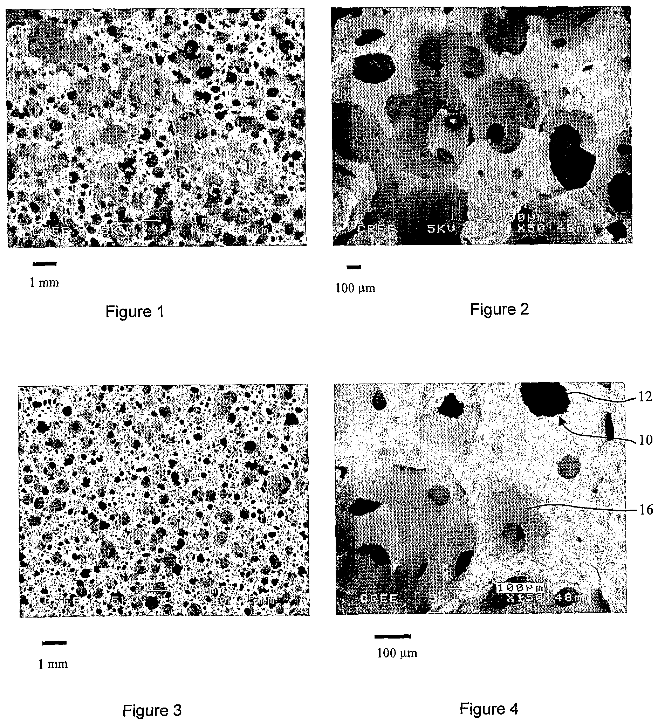

La céramique poreuse obtenue par frittage de la préforme est une mousse à structure ouverte et interconnectée. Elle présente avantageusement une densité après cuisson comprise entre 8 et 50% de la densité théorique du matériau (égale à 4 grammes par centimètres cube pour l'alumine par exemple), soit 50 à 92% de porosité. La taille des pores cellulaires varie entre 10 et 2000 µm, comme cela est visible sur les figures 1 à 4.

La mousse présente une pluralité de cellules 10 connectées à d'autres cellules adjacentes par des fenêtres 12. Une cellule à la surface de la mousse céramique poreuse présente encore une ou plusieurs ouvertures 16 vers l'extérieur. On appelle « porosité d'interconnexion » la porosité créée par les fenêtres d'interconnexion 12 entre les cellules et par les ouvertures 16 des cellules superficielles.

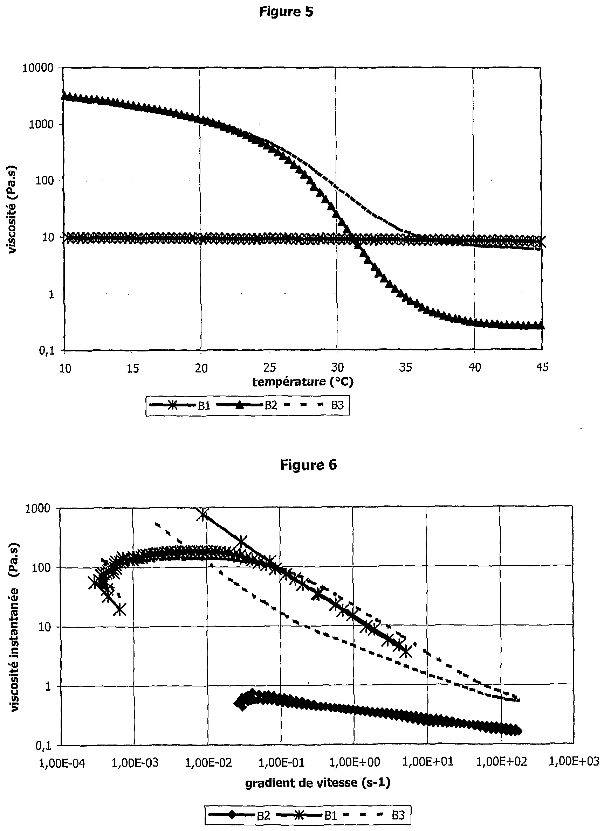

On se reporte à présent aux figures 5 et 6.

La figure 5 représente l'évolution de la viscosité de trois pré-mélanges B1, B2 et B3, fournis à titre d'exemples.
- B1 contient 87% d'eau, 7,4% de glycérine, 4,8% d'alcool polyvinylique et 0,8% de xanthane.
- B2 contient 77,3% d'eau, 6,5% de glycérine, 4,2% d'alcool polyvinylique et 12% de gélatine.
- B3 contient 76,7% d'eau, 6,5% de glycérine, 4,2% d'alcool polyvinylique, 11,9% de gélatine et 0,7% de xanthane.

Ces pré-mélanges sont préparés à 80°C puis maintenus 3 heures à 40°C. On mesure ensuite la viscosité de ces mélanges, maintenus au repos, en fonction de leur température en baissant la température de 1°C par minute, depuis 45°C (proche de la température d'élaboration du mélange M) jusqu'à 10°C. La mesure est effectuée avec un viscosimètre Bohlin® CVO 120 en cône plan (diamètre 40mm, angle 4°) en oscillation à 1 hertz avec une déformation de 0,01. Les résultats du test A sont présentés sur la figure 5.

La figure 5 montre que le xanthane seul (courbe B1) ne permet pas de faire varier la viscosité du mélange en fonction de la température. Le xanthane n'est donc pas un gel thermoréversible, à la différence de la gélatine (figure B2). Le xanthane n'apparaît donc pas approprié pour faire varier la viscosité d'un mélange céramique en fonction de la température. Il apparaît donc en particulier peu approprié pour gélifier une mousse céramique lors de son refroidissement.

Il apparaît également sur la figure 5 que le xanthane ne permet pas, à lui seul, d'atteindre une viscosité importante susceptible de figer une mousse céramique. Au contraire, la gélatine permet d'atteindre, à température ambiante (10-25°C), des viscosités satisfaisantes, entre 200 et 500 fois supérieures à celles atteintes avec le xanthane seul.

Il apparaît enfin sur la figure 5 que la présence de xanthane n'entrave pas l'action gélifiante de la gélatine, l'effet du xanthane étant négligeable à des températures inférieures à 25 °C. L'association de xanthane et de gélatine n'a apparemment sensiblement aucun effet technique à des températures inférieures à 25 °C et ne semble donc pouvoir n'aboutir qu'à une augmentation des coûts de fabrication.

Sur la figure 6, les viscosités instantanées de B1, B2 et B3 à 45°C ont été représentées en fonction de ce gradient de vitesse (ou « vitesse de cisaillement »). Pour obtenir les résultats représentés sur la figure 6, on fait évoluer le gradient de vitesse de manière croissante, puis on attend 1 minute, puis on fait évoluer le gradient de vitesse de manière décroissante. Pendant toute la durée de l'essai, mené à une température de 45°C (proche de la température d'élaboration du mélange M), on mesure l'évolution de la viscosité. Les mesures sont effectuées avec un viscosimètre Bohlin® CVO 120 en cône plan (diamètre 40mm, angle 4°) en rotation.

On observe qu'en absence de xanthane, la viscosité de la gélatine n'évolue pas ou très peu en fonction du gradient de vitesse. En revanche, la viscosité instantanée du mélange de gélatine et de xanthane, comme celle du xanthane seul, diminue très fortement lorsque le cisaillement augmente et retrouve de très fortes valeurs lorsque le cisaillement diminue, et ce même à des teneurs faibles de xanthane.

Les inventeurs ont également constaté qu'une augmentation ou une diminution de la viscosité d'un produit (gélatine, xanthane ou mélange de xanthane et de gélatine), suite à une évolution de la température ou de la vitesse de cisaillement conduit, dans les mêmes conditions de température et de cisaillement, à une amélioration ou une détérioration, respectivement, de la tenue structurelle de la mousse obtenue par cisaillement d'une composition réfractaire incorporant ce produit.

A la fin de l'étape de cisaillement b), le mélange de gélatine et de xanthane incorporé dans le mélange M conduit ainsi, suivant l'enseignement de la figure 6, à une amélioration immédiate de la tenue structurelle de la mousse dans des proportions très largement supérieures à celle que pourrait conférer la gélatine seule. La mousse est alors suffisamment rigide pour ne pas s'effondrer sur elle-même. Elle est d'une manipulation plus facile. Enfin l'action du mélange de xanthane et de gélatine évite une modification de la structure (coalescence des bulles d'air, ségrégation de la poudre céramique...) qui pourrait conduire à une hétérogénéité du produit et une fragilisation.

La température de la mousse baisse alors progressivement, ce qui permet, suivant l'enseignement de la figure 5, d'augmenter encore la tenue structurelle de la mousse dans des proportions très largement supérieures à celle que pourrait conférer le xanthane seul. La mousse est alors suffisamment rigide pour pouvoir être manipulée dans des conditions industrielles sans se détériorer.

Les actions de la gélatine et du xanthane se complètent donc parfaitement pour la mise en oeuvre du procédé selon l'invention, en particulier pour la fabrication de pièces de grandes dimensions.

Les exemples non limitatifs suivants sont donnés dans le but d'illustrer l'invention.

Dans les exemples qui suivent, les matières premières employées ont été choisies parmi :
- de l'alumine Al₂O₃ réactive, ou un mélange d'alumines réactives, contenant plus de 99% d'Al₂O₃, le diamètre médian pouvant varier de 0,1 µm à 200 µm;
- de la zircone contenant plus de 99% de ZrO₂, le diamètre médian pouvant varier de 0,1 µm à 200 µm;
- du Prox® BO₃ dispersant à base de polyacrylate d'ammonium, commercialisé par Synthron;
- de la gélatine GPA A0, commercialisée par Wesardt International;
- du satiaxane^{™} CX90T, gomme de xanthane produite et commercialisée par SKW Biosystems;
- du RHODOVIOL® 4/125, alcool polyvinylique à faible taux d'hydrolyse (88mol%) commercialisé par Rhodia PPMC;
- de la glycérine, commercialisé par Moulet Peinture (Avignon - France);
- du Schäumungsmittel W53FL, dispersant à base de polyacrylate d'ammonium, commercialisé par Zschimmer & Schwarz GmbH.;
- de la cordiérite dont le diamètre médian est situé autour de 4µm et contenant 54% de SiO₂, 29% d'Al₂O₃, 13% de MgO et moins de 2,5% de Fe₂O₃+TiO₂;
- de la mullite dont le diamètre médian est situé autour de 9µm et contenant 26% de SiO₂, 73% d'Al₂O₃, 13% de MgO et moins de 2,5% de Fe₂O₃+TiO₂.

Dans tous les exemples suivants, le dispersant est toujours le Prox® BO3, l'agent moussant toujours le W53FL, le plastifiant est la glycérine et le durcissant est le RHODOVIOL® 4/125.

La barbotine A est réalisée par dispersion de la poudre céramique et du dispersant dans de l'eau. La poudre céramique est l'alumine (Al₂O₃) pour les exemples 1 à 16 et 19, la mullite (Al₂O₃-SiO₂) pour l'exemple 17, un mélange de 80% de cordierite et 20% de mullite pour l'exemple 18, et un mélange de 80% d'alumine et 20% de zircone pour l'exemple 20.

Le pré-mélange B est réalisé, dans un bain marie à 55°C, par dissolution de gélatine GPA A0 et éventuellement de xanthane, de glycérine et de durcissant dans de l'eau.

Le pré-mélange C est réalisé par solubilisation de deux tiers (en poids) d'agent moussant solubilisé dans un tiers d'eau.

A et C sont ajoutés à B dans un bain marie à 55°C sous agitation mécanique constante pendant 20 minutes. Les proportions des constituants de A, B et C dans le mélange final M, hors poudre céramique, sont données dans le tableau 1. La mousse obtenue est coulée dans un moule à température ambiante, inférieure à 25°C. Le moule a des dimensions de 300mmx300mmx45mm sauf pour l'exemple 19 pour lequel le moule a une hauteur de 80mm (section identique : 300mmx300mm). Elle est séchée 24 heures à température ambiante puis 24 heures à 35°C sous ventilation forcée pour obtenir la préforme.

Cette préforme est ensuite frittée sous air pendant 4 heures à 1600°C sauf pour les exemples 1 et 2 pour lesquels la préforme obtenue était trop friable pour subir le cycle de frittage. Ces exemples, qui ne comprennent pas d'agent stabilisant, sont donc hors invention.

On peut remarquer que, lors du frittage, le retrait dimensionnel, de l'ordre 15 à 20%, est sensiblement le même dans toutes les directions.

Certaines caractéristiques des mousses céramiques ainsi obtenues ont été reportées dans les tableaux 1 et 2.

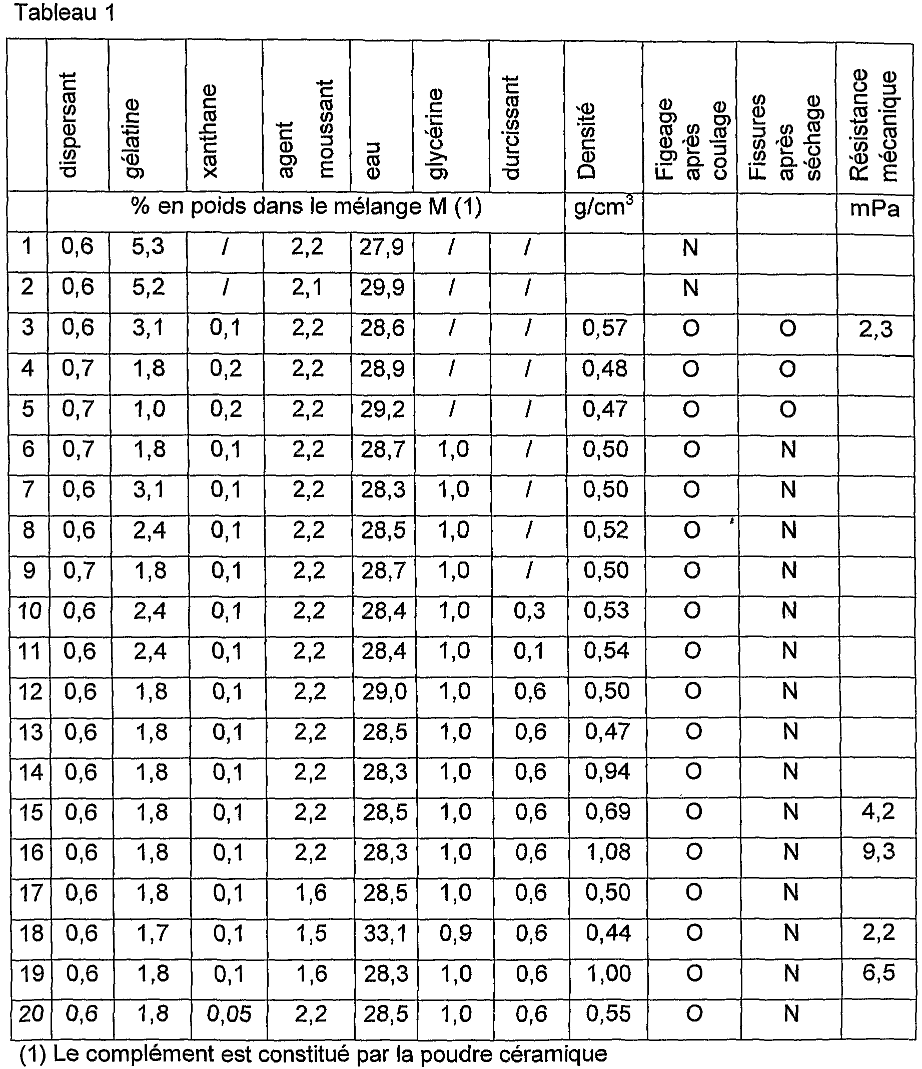

Après le coulage, on peut parfois constater un figeage immédiat dès que l'agitation et/ou la manipulation (coulage dans un moule) cesse. Par « figeage », on entend que la hauteur de la pièce coulée ne diminue pas et/ou ne varie pas selon les zones de la pièce coulée. Dans le tableau, « O » signifie que le figeage a été observé et « N » signifie que la structure de la mousse coulée a évolué après coulage (absence de figeage).

Enfin, pour certaines mousses on observe la présence de quelques fissures sur les pièces séchées. La présence de fissures est indiquée par « O » dans le tableau 1, « N » signifiant qu'il n'y a pas de fissure observée. Ces fissures sont principalement situées sur les arêtes des pièces et ont une longueur de quelques mm à quelques cm. Ces fissures ne sont pas critiques et pourraient être éliminées par usinage. Elles sont cependant gênantes.

La densité est mesurée selon une méthode géométrique et exprimée en grammes par centimètres cube.

Les résultats du tableau 1 mettent en évidence la nécessité d'ajouter un agent stabilisant apte à figer la structure obtenue par moussage mécanique. On obtient ainsi des pièces homogènes et aux dimensions souhaitées.

L'agent plastifiant permet d'obtenir des pièces plus souples et pour lesquelles le séchage n'induit pas la formation de fissures. Par ailleurs, de préférence, comme c'est le cas ici, l'agent plastifiant utilisé brûle à une température très supérieure à la température d'évaporation de l'eau. Ce composé va donc jouer son rôle même sur la pièce séchée et, lors du frittage, va permettre de garder une certaine humidité dans la pièce et éviter ainsi une cuisson trop rapide et un effet de "croûte" sur le produit final. Cet effet favorable est particulièrement utile pour la fabrication de pièces de grandes dimensions.

**Tableau 2**

| | 12 | 14 | 15 | 18 |
|---|---|---|---|---|
| Densité (g/cm³) | 0,5 | 0,94 | 0,69 | 0,44 |
| Porosité (%) | 87,5 | 76,5 | 82,7 | 81,9 |
| Nombre de pores cellulaires par dm² | 598 | 1397 | 607 | 917 |
| Nombre de pores cellulaires de taille supérieure à 300µm (%) | 30 | 18 | 30 | 42 |
| Nombre de pores cellulaires de taille supérieure à 450µm (%) | 20 | 5 | 17 | 25 |
| Nombre de pores cellulaires de taille supérieure à 750µm (%) | 6 | 0 | 5 | 6 |
| Nombre de pores cellulaires de taille inférieure à 100µm (%) | 47 | 49 | 46 | 23 |
| Perte de charge pour un débit d'air de 22 m³/h (mbar) | 0,93 | 13,5 | | 0,91 |

La porosité des produits, telle qu'observée par exemple sur les figures 1- 4 et caractérisée au tableau 2, montre des pores cellulaires dont la taille varie 10 et 2000 µm.

Comme décrit ci-dessus, il s'agit d'une structure formée de cellules imbriquées, délimitées par des parois céramiques et connectées entre elles par des fenêtres.

De manière surprenante, les inventeurs ont constaté que le procédé selon l'invention confère à la mousse une microstructure particulière.

D'abord, la taille des pores cellulaires est répartie de manière relativement homogène entre 10 et 2000µm ; moins de 10% des pores cellulaires ont une taille inférieure à 10µm, 20 à 85% des pores cellulaires ont une taille inférieure à 300µm et 4 à 40% des pores cellulaires ont une taille supérieure à 450µm.

Par rapport aux mousses céramiques connues antérieurement, les mousses de l'invention se distinguent également par une plage de tailles de pores cellulaires très étendue, l'absence d'une taille de pores cellulaires dominante et un plus faible nombre de pores cellulaires par unité de surface. On peut en effet compter en général moins de 1500 pores cellulaires par dm².

Par ailleurs, on observe que, lorsque la densité diminue, l'augmentation de porosité se fait par augmentation de la taille des pores cellulaires alors que leur nombre diminue. Plus de 15% des pores cellulaires, et parfois même au moins 30% des pores cellulaires, ont une taille supérieure à 300µm.

Au contraire, les mousses céramiques connues antérieurement présentent une taille de pores variant peu en fonction de la densité et généralement inférieure à 300µm pour 90% des pores ; la diminution de densité s'accompagne alors d'une augmentation du nombre de pores.

Le nouveau procédé de fabrication selon l'invention permet ainsi de fabriquer des mousses céramiques dont la structure est nouvelle et confère plusieurs avantages.

La présence de gros pores cellulaires permet ainsi d'obtenir des produits présentant une très faible perte de charge ce qui est particulièrement avantageux dans certaines applications, par exemple pour la filtration de gaz.

Les mousses selon l'invention sont également remarquables en ce qu'elles présentent une pureté chimique très élevée. Cette pureté est liée à la pureté des matières premières céramiques utilisées puisque tous les composants organiques utilisés sont brûlés au cours du frittage.

Les produits des exemples 12 et 14 ont été caractérisés pour évaluer l'intérêt de les utiliser comme agent isolant. Ces produits ont été comparés à des briques réfractaires isolantes RI34 commercialisées par Saint-Gobain Ceramics et à des 18 panneaux de fibres réfractaires ALTRA® KVS commercialisés par Rath Performance Fibers.

Les résultats sont donnés dans le tableau 3. La température d'affaissement correspond à la température à laquelle une éprouvette cylindrique s'est affaissée de 2% de sa hauteur initiale lorsqu'elle est soumise à une pression de 2 bars.

**Tableau 3**

| | | 12 | 14 | RI34 | KVS |
|---|---|---|---|---|---|
| Analyse chimique : Al₂O₃ (%) | | 99,8 | 99,9 | 99,0 | 85,0 |
| Densité (g/cm³) | | 0,5 | 0,94 | 1,6 | 0,7 |
| Porosité (%) | | 87,5 | 76,5 | 60 | - |
| Taille moyenne des pores cellulaires (µm) | | 10 - 1000 | 2-500 | | - |
| Module à rupture à 20°C en flexion 3 points (MPa) | | 2 -2,5 | 12-15 | 10,5 | 1 |
| Résistance à l'écrasement à 20°C (MPa) | | 3-5 | 20-30 | 34 | 0,8 |
| Température d'affaissement | | 1540°C | > 1730°C | > 1730°C | 1175°C |
| Conductivité thermique (W/m.K) | à 20°C | 0,60 | 3,7 | - | - |
| | à 400°C | 0,45 | 2,0 | 1,7 | 0,28 |
| | à 800°C | 0,47 | 1,4 | 1,3 | 0,31 |
| | À 1000°C | 0,53 | 1,2 | 1,25 | 0,33 |
| | à 1200°C | - | 1,1 | - | 0,38 |

On constate que les produits de l'invention, en particulier ceux de densité proche de 1, présentent une résistance mécanique suffisante pour constituer des pièces de structure telles que les briques réfractaires traditionnelles utilisées pour les murs d'isolation.

On constate que les produits de l'invention présentent un pouvoir isolant supérieur, en particulier à hautes températures, aux briques réfractaires traditionnelles et du même ordre que les panneaux de fibres.

Avantageusement, les produits de l'invention ne présentent pas les problèmes d'hygiène évoqués pour certains panneaux de fibres.

## Revendications

1. Procédé de fabrication d'une pièce céramique poreuse comprenant les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
**caractérisé en ce qu'**on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.

2. Procédé selon la revendication 1, **caractérisé en ce que** la viscosité instantanée dudit agent stabilisant, en Pa.s, augmente d'au moins un facteur cent quand une vitesse de cisaillement dudit agent stabilisant diminue de 100 s⁻¹ à 0 s⁻¹.

3. Procédé selon l'une quelconque des revendications 1 et 2, **caractérisé en ce que**, l'évolution de la viscosité dudit agent stabilisant en fonction de la vitesse de cisaillement dudit agent stabilisant est sensiblement réversible.

4. Procédé selon l'une quelconque des revendications précédentes, **caractérisé en ce que**, à l'étape a), on prépare ledit mélange M à partir d'une barbotine céramique A, d'un pré-mélange B contenant au moins un agent gélifiant et un agent stabilisant, et d'un pré-méfange C contenant au moins un agent moussant.

5. Procédé selon l'une quelconque des revendications précédentes, **caractérisé en ce que** ledit agent stabilisant est choisi dans le groupe formé par le xanthane et le carraghénane ou un mélange de ceux-ci.

6. Procédé selon l'une quelconque des revendications précédentes, **caractérisé en ce que** la teneur dudit agent stabilisant dans ledit mélange M est comprise entre 0,05 et 5% en poids.

7. Procédé selon l'une quelconque des revendications précédentes, **caractérisé en ce que** la teneur dudit agent stabilisant dans ledit mélange M est comprise entre 0,1 et 1%, en poids.

8. Procédé selon l'une quelconque des revendications précédentes, **caractérisé en ce que** ledit mélange M présente une teneur en eau inférieure à 40%, en pourcentage en poids.

9. Procédé selon la revendication 8, **caractérisé en ce que** ledit mélange M présente une teneur en eau inférieure à 30%, en pourcentage en poids.

10. Procédé selon l'une quelconque des revendications précédentes, **caractérisé en ce que** ledit agent gélifiant est un hydrocolloïde d'origine animale ou végétale apte à gélifier de manière thermoréversible ladite composition après moussage.

11. Procédé selon l'une quelconque des revendications précédentes, **caractérisé en ce que** ledit agent gélifiant est de la gélatine.

12. Procédé selon l'une quelconque des revendications précédentes, **caractérisé en ce que** la teneur en agent gélifant dans le mélange M est comprise entre 1 et 10%, de préférence entre 1 et 6%, en poids.

13. Procédé selon l'une quelconque des revendications précédentes, **caractérisé en ce qu'**à l'étape a), on ajoute audit mélange M un agent plastifiant en une quantité en poids comprise entre 0,25 et 1 fois celle dudit agent gélifiant.

14. Procédé selon l'une quelconque des revendications précédentes, **caractérisé en ce qu'**il comporte une étape additionnelle e) de frittage de ladite préforme.

15. Mousse céramique poreuse obtenue selon un procédé conforme à la revendication 14, présentant une densité après cuisson comprise entre 8 et 50% de la densité théorique du matériau constituant ladite mousse, moins de 10% des pores cellulaires ayant une taille inférieure à 10µm, 20 à 85% des pores cellulaires ayant une taille inférieure à 300µm et 4 à 40% des pores cellulaires ayant une taille supérieure à 450µm, les pourcentages étant des pourcentages en nombre.

16. Mousse céramique poreuse selon la revendication 15, **caractérisée en ce que** la taille des pores cellulaires varie entre 10 et 2000 µm.

17. Mousse céramique poreuse selon l'une quelconque des revendications 15 et 16 dans laquelle plus de 15% en nombre des pores cellulaires ont un diamètre supérieur à 300µm.

18. Mousse céramique poreuse selon l'une quelconque des revendications 15 à 17 présentant en surface moins de 1500 pores cellulaires par dm².

19. Utilisation d'une mousse céramique poreuse selon l'une quelconque des revendications 15 à 18 pour l'isolation thermique, notamment dans des fours, pour des supports de catalyse, pour la filtration de liquides ou de gaz chauds, comme diffuseur dans un brûleur à gaz, ou bien comme arrêteur de flamme, dans un récepteur volumétrique solaire, dans des produits sandwichs ou comme joint souple.

## Patentansprüche

1. Verfahren zur Herstellung eines porösen keramischen Teils, welches die im Folgenden dargestellten aufeinanderfolgenden Schritte aufweist:
a) Zubereitung einer Mischung M aus einem in Suspension befindlichen keramischen Pulver, aus mindestens einem Geliermittel und mindestens einem Aufschäummittel, bei einer Mischtemperatur, die größer als die Geliertemperatur des genannten Geliermittels ist,
b) zerschneiden dieser Mischung M bei einer Schäumtemperatur, die größer ist als die besagte Geliertemperatur, bis zum Erhalt eines Schaums,
c) gelieren dieses Schaums durch Herabkühlung der Mischung M auf eine Temperatur, die kleiner ist als die Geliertemperatur des Geliermittels,
d) trocknen des gelierten Schaums, so dass eine Vorform erhalten wird, **dadurch gekennzeichnet, dass** der Mischung M ein Stabilisierungsmittel hinzugefügt wird, dessen momentane Viskosität, in Pa.s um mindestens einen Faktor 10 vergrößert wird, wenn eine Zerschneidegeschwindigkeit des Stabilisierungsmittels von 100 s⁻¹ auf 0 s⁻¹ verringert wird.

2. Verfahren nach Anspruch 1, **dadurch gekennzeichnet, dass** die momentane Viskosität des Stabilisierungsmittels, in Pa.s, sich um mindestens einen Faktor 100 vergrößert, wenn eine Zerschneidegeschwindigkeit des Stabilisierungsmittels von 100 s⁻¹ auf 0 s⁻¹ verringert wird.

3. Verfahren nach einem der Ansprüche 1 oder 2, **dadurch gekennzeichnet, dass** die Entwicklung der Viskosität des Stabilisierungsmittels als Funktion der Zerschneidegeschwindigkeit des Stabilisierungsmittels spürbar reversibel ist.

4. Verfahren nach einem der vorhergehenden Ansprüche, **dadurch gekennzeichnet, dass** in Schritt a) eine Mischung M ausgehend von einem keramischen Barbotin A, einer Vormischung B bestehend mindestens aus einem Geliermittel und einem Stabilisierungsmittel und einer Vormischung C bestehend aus mindestens einem Aufschäummittel bereitet wird.

5. Verfahren nach einem der vorhergehenden Ansprüche, **dadurch gekennzeichnet, dass** das Stabilisierungsmittel ausgewählt ist aus der Gruppe, die aus Xanthan und Carragenan oder einer Mischung derselben besteht.

6. Verfahren nach einem der vorhergehenden Ansprüche, **dadurch gekennzeichnet, dass** der Gehalt an Stabilisierungsmittel in der Mischung M zwischen 0.05 und 5% in Gewichtsprozenten liegt.

7. Verfahren nach einem der vorhergehenden Ansprüche, **dadurch gekennzeichnet, dass** der Gehalt an Stabilisierungsmittel in der Mischung M zwischen 0,1 und 1% in Gewichtsprozenten liegt.

8. Verfahren nach einem der vorhergehenden Ansprüche, **dadurch gekennzeichnet, dass** die Mischung M einen Wassergehalt aufweist, der kleiner als 40% in Gewichtsprozenten ist.

9. Verfahren nach Anspruch 8, **dadurch gekennzeichnet, dass** die Mischung M einen Wassergehalt aufweist, der kleiner als 30% in Gewichtsprozenten ist.

10. Verfahren nach einem der vorhergehenden Ansprüche, **dadurch gekennzeichnet, dass** das Geliermittel ein Hydrocolloid mit tierischem oder pflanzlichem Ursprung ist, das geeignet ist, in thermoreversibler Art die Mischung nach dem Schäumen zu gelieren.

11. Verfahren nach einem der vorhergehenden Ansprüche, **dadurch gekennzeichnet, dass** das Geliermittel Gelatine ist.

12. Verfahren nach einem der vorhergehenden Ansprüche, **dadurch gekennzeichnet, dass** der Gehalt an Geliermittel in der Mischung M zwischen 1 und 10%, vorzugsweise zwischen 1 und 6% in Gewichtsprozenten liegt.

13. Verfahren nach einem der vorhergehenden Ansprüche, **dadurch gekennzeichnet, dass** im Schritt a) der Mischung M ein Plastifiziermittel hinzugefügt wird, und zwar in einer Gewichtsmenge, die zwischen 0,25 und 1 mal der des Geliermittels liegt.

14. Verfahren nach einem der vorhergehenden Ansprüche, **dadurch gekennzeichnet, dass** es einen zusätzlichen Schritt e) des Sinterns der Vorform aufweist.

15. Poröser keramischer Schaum, der durch ein Verfahren gemäß Anspruch 14 erhalten wird, welcher eine Dichte zwischen 8 und 50% der theoretischen Dichte des Materials, das den Schaum bildet, aufweist, wobei weniger als 10% der Zellporen eine Größe aufweisen, die kleiner als 10µm ist, wobei 20 bis 85% der Zellporen eine Größe aufweisen, die kleiner als 300µm ist, und 4 bis 40% der Zellporen eine Größe aufweisen, die größer als 450µm ist, wobei die Prozentsätze Anzahl Prozente sind.

16. Poröser keramische Schaum nach Anspruch 15, **dadurch gekennzeichnet, dass** die Größe der Zellporen zwischen 10 und 2000µm variiert.

17. Poröser keramischer Schaum nach einem der Ansprüche 15 oder 16, in welchem mehr als 15% der Anzahl der Zellporen einen Durchmesser aufweisen, der größer als 300µm ist.

18. Poröser keramischer Schaum nach einem der Ansprüche 15 bis 17, welcher in der Oberfläche weniger als 1500 Zellporen pro dm² aufweisen.

19. Verwendung eines porösen keramischen Schaums nach einem der Ansprüche 15 bis 18 für die thermische Isolation, vorzugsweise in Öfen, für Katalyseträger, für die Filtration von Flüssigkeiten oder heißen Gasen, wie ein Diffusor in einem Gasbrenner, oder auch als Flammensperre, in einem volumetrischen Solarreceiver, in Sandwichprodukten oder als flexible Verbindung.

## Claims

1. A method of manufacturing a porous ceramic part, comprising the following steps in succession:
a) preparing a mixture M containing a ceramic powder in suspension, at least one gelling agent and at least one foaming agent, at a mixing temperature which is higher than the gelling temperature of said gelling agent;
b) shearing said mixture M at a foaming temperature which is higher than said gelling temperature, to obtain a foam;
c) gelling said foam by cooling said mixture M to a temperature below the gelling temperature of said gelling agent; and
d) drying said gelled foam to obtain a reform;
**characterized in that** a stabilizing agent is added to said mixture M, which agent has un instantaneous viscosity, in Pa.s, that increases by a factor of at least ten when a shear rate of said stabilizing agent is reduced from 100 s⁻¹ to 0 S⁻¹.

2. A method according to claim 1, **characterized in that** the instantaneous viscosity of said stabilizing agent, in Pa.s, increases by a factor of at least a hundred when the shear rate of said stabilizing agent is reduced from 100 s⁻¹ to 0 s⁻¹.

3. A method according to any one of claims 1 and 2, **characterized in that** the change in viscosity of said stabilizing agent as a function of the shear rate of said stabilizing agent is substantially reversible.

4. A method according to any one of the preceding claims, **characterized in that** in step a), said mixture M is prepared from a ceramic slip A, a pre-mixture B containing at least one gelling agent and a stabilizing agent and a pre-mixture C containing at least one foaming agent.

5. A method according to any one of the preceding claims, **characterized in that** said stabilizing agent is selected from the group formed by xanthan and carrageenan or a mixture thereof.

6. A method according to any one of the preceding claims, **characterized in that** the amount of said stabilizing agent in said mixture M is in the range 0.05% to 5% by weight.

7. A method according to any one of the preceding claims, **characterized in that** the amount of said stabilizing agent in said mixture M is in the range 0.1% to 1% by weight.

8. A method according to any one of the preceding claims, **characterized in that** said mixture M has a water content of less than 40% as a percentage by weight.

9. A method according to claim 8, characterized in thatsaid mixture M has a water content of less than 30% as a percentage by weight.

10. A method according to any one of the preceding claims, **characterized in that** said gelling agent is a hydrocolloid of animal or vegetable origin which can thermoreversibly gel said composition following foaming.

11. A method according to any one of the preceding claims, **characterized in that** said gelling agent is gelatin.

12. A method according to any one of the preceding claims, **characterized in that** the amount of gelling agent in the mixture M is in the range 1% to 10%, preferably in the range 1% to 6%, by weight.

13. A method according to any one of the preceding claims, **characterized in that** in step a), a plasticizing agent is added to said mixture M in a quantity by weight in the range multiplying that of said gelling agent by 0.25 to 1.

14. A method according to any one of the preceding claims, comprising an additional step e) for sintering said preform.

15. A porous ceramic foam obtained using a method according claim 14, having a density after firing in the range 8% to 50% of the theoretical density of the material constituting said foam, less than 10% of the cellular pores having a size of less than 10 µm, 20% to 85% of the cellular pores having a size of less than 300 µm and 4 to 40% of the cellular pores having a size greater than 450 µm, the percentages being percentages by number.

16. A porous ceramic foam according to claim 17, **characterized in that** the cellular pore size is in the range 10 µm to 2000 µm.

17. A porous ceramic foam according to any of claims 15 and 16 wherein more than 15% by number of the cellular pores have a diameter of more than 300 µm.

18. A porous ceramic foam according to any of claims 15 to 17 having on a surface less than 1 500 cellular pores per dm2.

19. Use of a porous ceramic foam according to any one of the claims 15 to 18, for thermal insulation, in particular in furnaces, for catalyst supports, for filtering hot gas or liquids, as a diffuser in a gas burner, or as a flame check, in a solar volumetric receiver, in sandwich products or as a flexible seal.
